# EUROPEAN PATENT SPECIFICATION

(11) **EP 1 491 805 B1**
(45) Date of publication and mention of the grant of the patent: **21.12.2005**
(21) Application number: 04013687.1
(22) Date of filing: 10.06.2004
(51) Int. Cl.: F16K 31/58, E03C 1/04

(54) **Single-control mixing faucet**
Einhebelwasserarmatur
Robinet à commande unique

(30) Priority: 10.06.2003 IT MI20031170
(43) Date of publication of application: 29.12.2004
(73) Proprietor: Gallazzini S.p.A., 13010 Roccapietra Di Varallo (VC) (IT)
(72) Inventor: Gallazzini, Giacomo, 13010 Roccapietra Di Varallo (VC) (IT); Magnetti, Paolo, 13034 Desana (VC) (IT)
(74) Representative: Cicogna, Franco

(56) References cited:
- US-A- 3 469 603
- US-A- 4 761 839
- US-A- 5 530 972
- US-A1- 2003 088 913

## Description

### BACKGROUND OF THE INVENTION

The present invention relates to a single-control mixing faucet with a tilting barrel for under-window assembling.

Single-control mixing faucets for under-window installation, including a tilting water delivery barrel, which barrel can be tilted-down for opening a window, without interfering against said window, are already known, for example from document US 4761839.

However, in the above disclosed faucet construction, as the barrel is tilted or folded down, the end portion of said barrel can excessively enter the wash-basin body, which can be filled with water, i.e. uncleaned water, with consequent pollution drawbacks.

Another problem is that if the faucet is accidentally opened with its delivery barrel in a tilted down condition, then water could be ejected to the outside from the wash-basin.

### SUMMARY OF THE INVENTION

Accordingly, the aim of the present invention is to overcome the above mentioned drawbacks, by providing a single-control mixing faucet having a tilting-down barrel, for under-window assembling or installation, designed for preventing the delivery barrel from entering the wash-basin, thereby solving all problems related to a possible pollution of the delivery barrel.

Within the scope of the above mentioned aim, a main object of the present invention is to provide such a mixing faucet which, the delivery barrel thereof being in a tilted or folded down position, is adapted to drastically reduce the water delivery, thereby preventing water from being ejected outside of the wash-basin.

Yet another object of the present invention is to provide such a mixing faucet which, owing to its specifically designed constructional features, is very reliable and safe in operation.

Yet another object of the present invention is to provide such a single-control mixing faucet with a tilting barrel for under-window assembling, which can be easily constructed and which, moreover, is very competitive from a mere economic standpoint.

According to one aspect of the present invention, the above mentioned aim and objects, as well as yet other objects, which will become more apparent hereinafter, are achieved by a single-control mixed faucet with a tilting barrel for under-window assembling, comprising a faucet body having a substantially horizontal axis provided, on a side thereof, with a control lever, and, on the other side thereof, with a barrel holder bush, said faucet further comprising rotary means for rotatively driving said barrel holding bush, said rotary means being adapted to be actuated only as the faucet barrel is arranged at predetermined positions.

### BRIEF DESCRIPTION OF THE DRAWINGS

Further characteristics and advantages of the present invention will become more apparent hereinafter from the following detailed disclosure of a preferred, though not exclusive, embodiment of the subject single-control mixing faucet with a tilting barrel for under-window assembling, which is illustrated, by way of an indicative, but not limitative example, in the accompanying drawings, where:

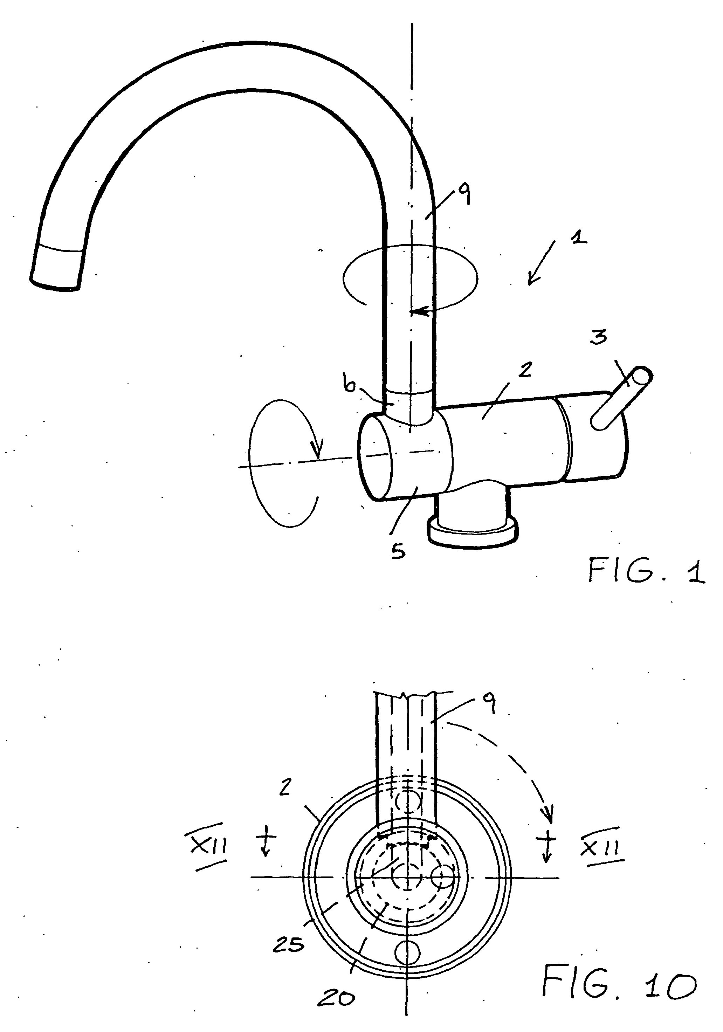

Figure 1 is a schematic perspective view illustrating the mixing faucet according to the present invention, with the water delivery barrel thereof arranged to be tilted or folded down;

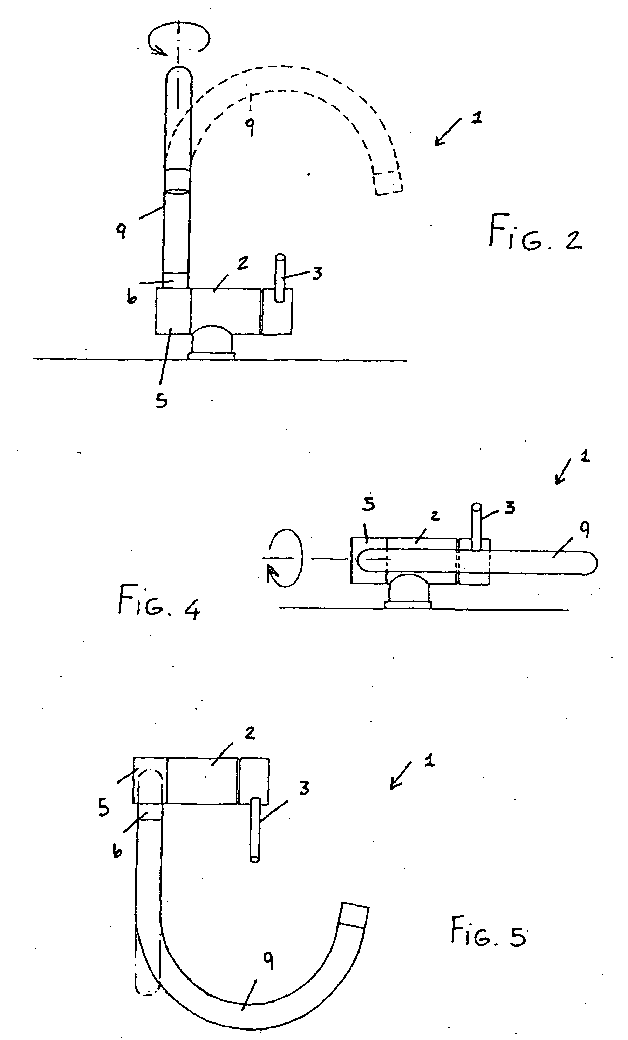

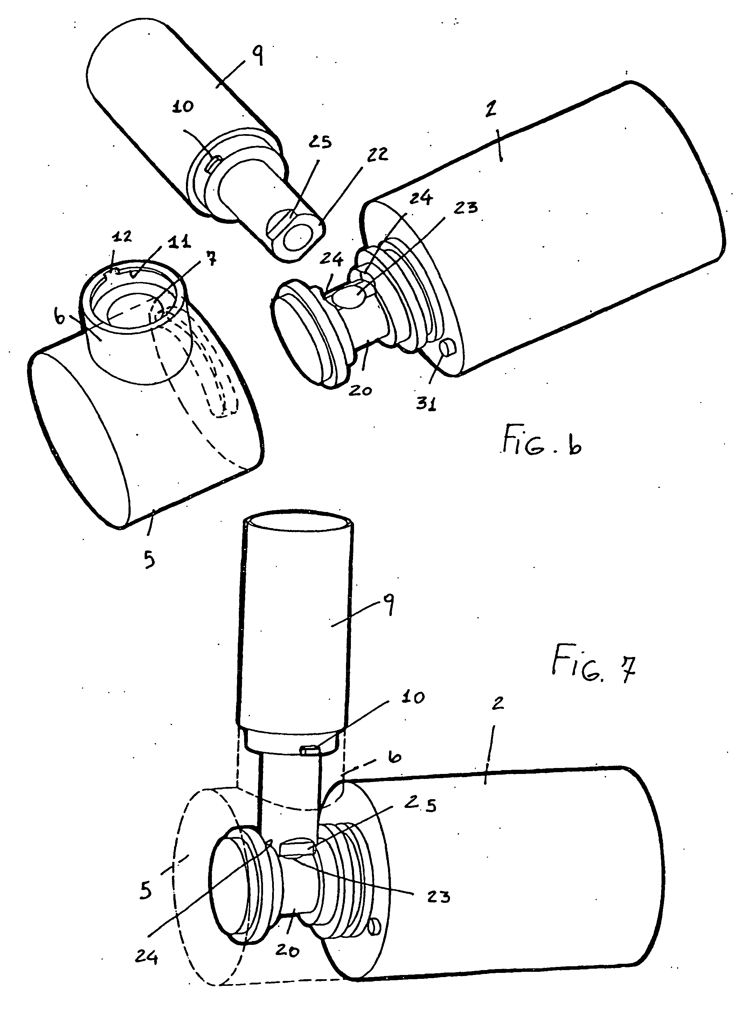

Figure 2 is an elevation view illustrating the mixing faucet with its water delivery barrel in a use position and the water delivery barrel in a tilted or folded down position, as indicated by dashed lines;

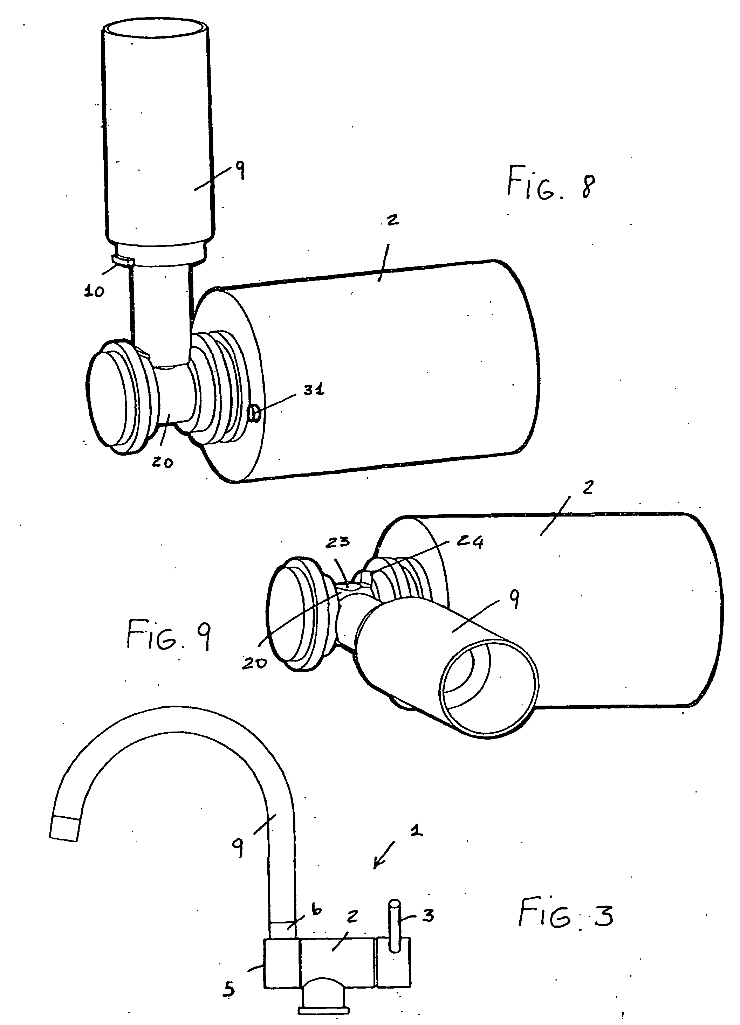

Figure 3 is a further elevation view illustrating the water delivery barrel thereof turned to a position adapted for being tilted or folded down;
Figure 4 is a further elevation view illustrating the mixing faucet with a tilted delivery barrel;
Figure 5 is a top plan view illustrating the mixing faucet with a tilted delivery barrel;
Figure 6 is an exploded perspective view illustrating the bush for coupling to the faucet body and the water delivery barrel;
Figure 7 is a schematic view illustrating the water delivery barrel coupled to the faucet body at a use position thereof;
Figure 8 is a schematic view showing the water delivery barrel in a turned or rotated condition to be tilted or folded down;

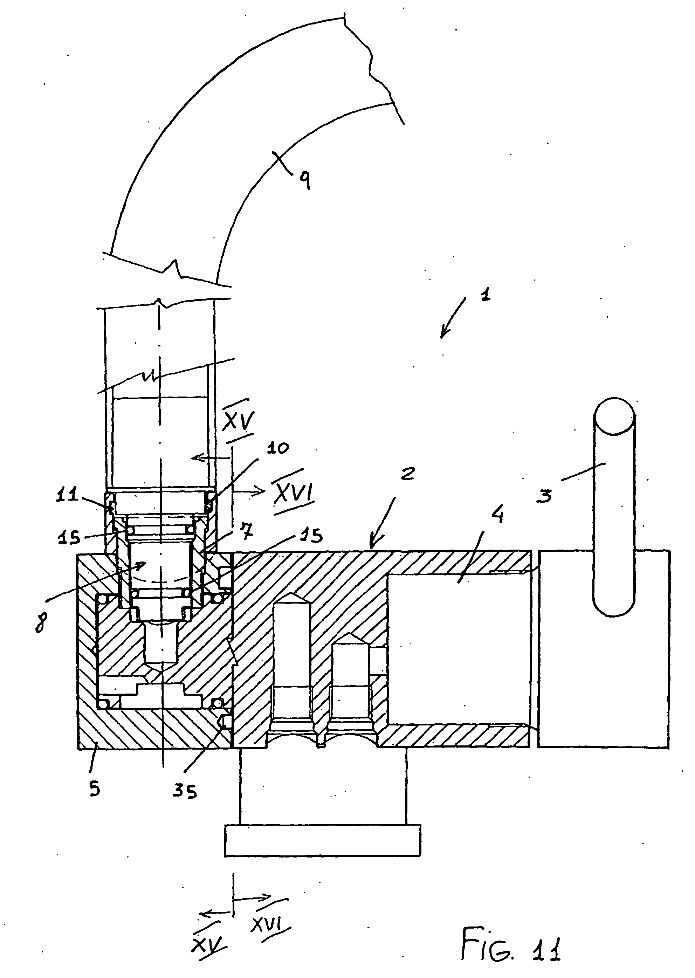

Figure 9 is a further schematic view illustrating, in perspective, the water delivery barrel in a tilted or folded down position;
Figure 10 is a schematic side view illustrating the water delivery barrel coupled to the faucet body and in a rotated condition to be folded or tilted down;

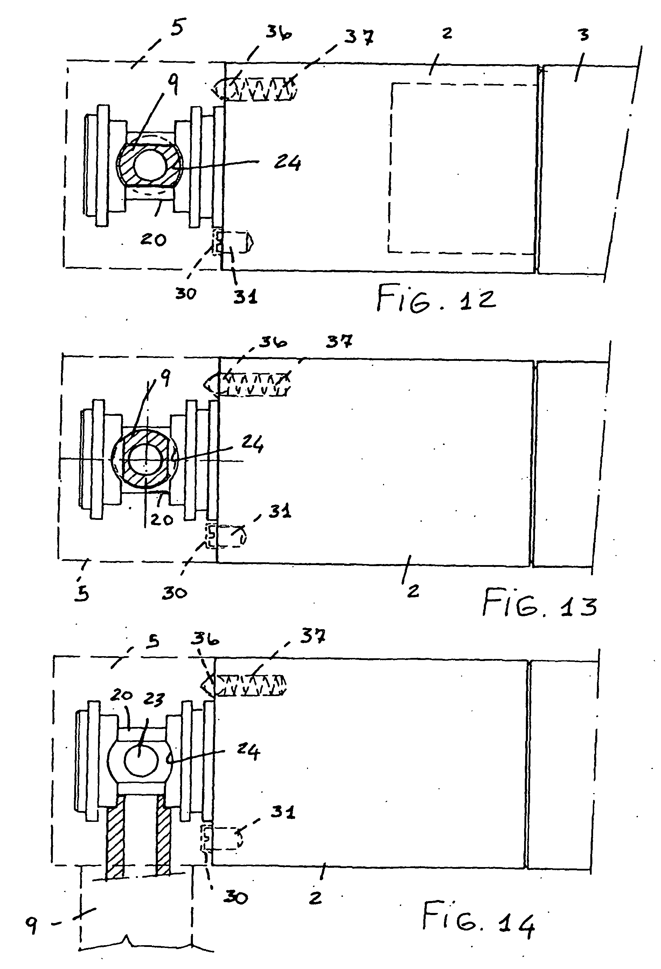

Figure 11 is a cross-sectional view illustrating the mixing faucet body, with the delivery barrel in a position to be tilted or folded down;
Figure 12 is a further cross-sectional view substantially taken along the section line XII-XII of figure 10, with the delivery barrel arranged in a normal or regular use position;
Figure 13 is a further cross-sectional view, substantially taken along the section line XII-XII of figure 10, with the delivery barrel arranged at a position to be tilted down;

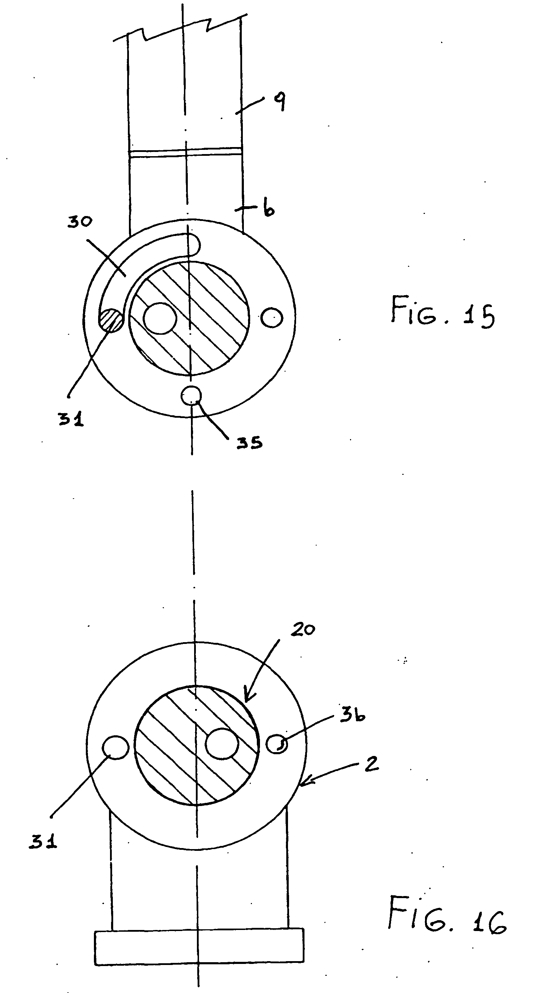

Figure 14 shows a further cross-sectional view, substantially taken along the line XII-XII of figure 10, with the delivery barrel in a tilted or folded down position;
Figure 15 is a further cross-sectional view substantially taken along the line XV-XV of figure 11; and
Figure 16 is yet another cross-sectional view substantially taken along the line XVI-XVI of figure 11.

### DESCRIPTION OF THE PREFERRED EMBODIMENTS

With reference to the number references of the above mentioned figures, the single-control mixing faucet with a tilting barrel for under-window assembling according to the present invention, which has been generally indicated by the reference number 1, comprises a faucet body 2, which is arranged with a substantially horizontal axis and comprises, on a side thereof, a control lever 3 for driving a conventional faucet cartridge, as generally indicated by the reference number 4.

On the other side, to the body 2 is coupled a delivery barrel holding bush 5, which radially comprises a bush element 6 in which is engaged a support element 7 for engaging in an engaging portion 8 of a water delivery barrel, as generally indicated by the reference number 9.

More specifically, the barrel 9 can turn or rotate about the supporting element 7, and in particular can turn through 360° about the rotary axis thereof.

For coupling to the base the plug-in or engaging portion, a radially extending notch 10 is provided, which can be engaged in a groove 11 defined by said bush element 6 by a cut-out 12, which is specifically so arranged as to allow the delivery barrel to be engaged with its position on the opposite side of the wash-basin.

Thus, in order to thread or engage the delivery barrel in the supporting element 7, it would be sufficient to turn said delivery barrel at a part opposite to a conventional delivery condition, and then to engage the notch 10 in the groove 11 to provide the possibility of turning it through 360° about the axis of the supporting element 7.

The engaging or insert portion 8 is tightly engaged in said supporting element 7 by conventional O-Ring means, generally indicated by the reference number 15.

The barrel holding bush 5 is tightly engaged with an end-piece, coupled to the faucet body, and defining a recessed groove 20 for engagement with an end portion 22 of the plug-in element 8.

At the water inlet 23, said groove defines an enlarged portion 24, allowing the end portion 22 to turn about the axis thereof, said end portion 22 including flattened portions 25 which are oppositely arranged to reduce the diameter thereof.

As is shown in figure 12, the end portion of the plug-in or insert element 8 is adapted to freely rotate in the enlarged portion 24, thereby allowing a 360° rotation about its axis of the barrel 9, as the latter is arranged with a vertically extending attachment axis.

In order to tilt or fold down the delivery barrel, the latter must be arranged in the vertical plane passing through the axis of the faucet body 2, so as to allow the flattened portions 25 to align with the recessed groove 20.

Thus, it will be possible to tilt or fold down the water delivery barrel, by a rotation through 90° about the axis of the faucet body.

To limit the rotation on the front surface of the bush facing the faucet body 2, a slot 30 is provided, said slot extending through 90° and engaging with an abutment peg 31 projecting from the faucet body 2.

On the front face of the bushes are moreover provided locating recesses 35, which are arranged at a spacing of 90° from one another, and in which is respectively engaged a small ball element 36 urged by an urging spring 37 arranged inside the faucet body 2.

Thus, the delivery barrel can be arranged at a stable position, i.e. both in the use condition and in the non-use tilted down condition.

In this connection it should be moreover pointed out that, with the delivery barrel in a lowered or tilted-down position, the water flow will be drastically reduced, since the water will be exclusively able of leaking, due to the fact that the hole defined by the plug-in element 8 is not registered, in this condition, with the water inlet 23, and the peg or pin hole is locked by the bottom portion of the recessed groove 20.

It would be moreover possible to provide a sealing gasket between the peg and groove, thereby reducing to a minimum the water leaking with the delivery barrel in a lowered or tilted-down condition.

From the above disclosure it should be apparent that the invention fully achieves the intended aim and objects.

More specifically, the invention provides a mixing faucet including a tilting water delivery barrel, which barrel can be tilted or folded down only at preset positions thereof, thereby said barrel cannot undesirably enter the wash-basin inner space.

The invention, as disclosed, is susceptible to several modifications and variations, all of which will come within the scope of the inventive idea.

Moreover, all the constructional details can be replaced by other technically equivalent elements.

In practicing the invention, the used materials, as well as the contingent size and shapes, can be any, depending on requirements.

## Claims

1. A single-control mixing faucet (1) with a tilting barrel (9) for under-window assembling, comprising a faucet body (2) having a substantially horizontal axis provided, on a side thereof, with a control lever (3) and, on the other side thereof, with a barrel holder bush (5), and rotary means for rotatively driving said barrel holding bush, **characterized in that** said rotary means is adapted to be actuated only as the faucet barrel (9) is arranged at predetermined positions.

2. A mixing faucet, according to the preceding claim, **characterized in that** on said bush is arranged a support element which radially extends and can be tightly engaged with the plug-in portion of the faucet barrel.

3. A mixing faucet, according to the preceding claims, **characterized in that** said supporting element is arranged inside a bush element defining, at a free end portion thereof, a groove having an engagement cut-out for a notch radially projecting from a base part of the barrel plug-in portion.

4. A mixing faucet, according to one or more of the preceding claims, **characterized in that** said notch engages in said cut-out with the delivery barrel arranged at 180° from the regular use position thereof.

5. A mixing faucet, according to one or more of the preceding claims, **characterized in that** said bush is tightly rotatively engaged about a substantially horizontally extending axis with an end-piece projecting from said faucet body.

6. A mixing faucet, according to one or more of the preceding claims, **characterized in that** said end-piece defines a recessed groove with an enlarged portion for housing therein an end portion of said plug-in element and that, at said enlarged portion, leads to the water delivery duct coming the faucet body.

7. A mixing faucet, according to one or more of the preceding claims, **characterized in that** the end portion of the plug-in portion comprises a pair of flattened portions to allow an engagement with said groove, at a position different from that of the enlarged portion.

8. A mixing faucet, according to one or more of the preceding claims, **characterized in that** said predetermined or preset positions for arranging the faucet barrel to be tilted down are defined on vertical plane passing through the axis of said faucet body.

9. A mixing faucet, according to one or more of the preceding claims, **characterized in that** the end portion of said plug-in portion engages with the bottom of said groove to provide a water passage restriction, with the delivery barrel in a tilted-down or lowered position.

10. A mixing faucet, according to one or more of the preceding claims, **characterized in that** said mixing faucet further comprises, on the bottom of said bush, a slot which extends through substantially 90°, and in which is engaged a peg projecting from said faucet body.

11. A mixing faucet, according to one or more of the preceding claims, **characterized in that** on the bottom of said bush is provided a plurality of notches arranged at 90° intervals from one another, for engaging with a locating ball element urged by an urging spring and housed on said faucet body.

12. A mixing faucet, according to one or more of the preceding claims, **characterized in that** said mixing faucet further comprises a sealing element arranged between the end portion of the barrel plug-in portion and the bottom of said recessed groove.

## Patentansprüche

1. Einhebelwassermischarmatur (1) mit einem sich neigenden Wasserspenderohr (9) zum Zusammenbau unter einem Fenster, umfassend einen Armaturkörper (2) mit einer im Wesentlichen horizontalen Achse, welche an einer ihrer Seiten mit einem Regelungshebel (3) und auf ihrer anderen Seite mit einer Rohrhaltermuffe (5) und einem Drehmittel zum rotierenden Betätigen der Rohrhaltermuffe ausgestattet ist, **dadurch gekennzeichnet, dass** das Drehmittel so ausgelegt ist, um nur betätigt zu werden, wenn das Armaturrohr (9) in vorbestimmten Positionen angeordnet ist.

2. Wassermischarmatur nach dem vorangehenden Anspruch, **dadurch gekennzeichnet, dass** auf der Muffe ein Trageelement angeordnet ist, welches sich radial erstreckt und mit dem Einsteckabschnitt des Armaturrohrs fest in Eingriff gebracht werden kann.

3. Wassermischarmatur nach den vorangehenden Ansprüchen, **dadurch gekennzeichnet, dass** das Trageelement in einem Muffenelement angeordnet ist, welches an einem freien Endabschnitt desselben eine Nut definiert, welche einen Eingriffsausschnitt für eine Raste aufweist, welche radial von einem Grundteil des Rohreinsteckabschnitts vorragt.

4. Wassermischarmatur nach einem oder mehreren der vorangehenden Ansprüche, **dadurch gekennzeichnet, dass** die Raste in den Ausschnitt einrastet, wenn das Wasserspenderohr mit 180° zu seiner üblichen Einsatzposition angeordnet ist.

5. Wassermischarmatur nach einem oder mehreren der vorangehenden Ansprüche, **dadurch gekennzeichnet, dass** die Muffe fest rotierend in Eingriff um eine im Wesentlichen sich horizontal erstreckende Achse steht, wobei ein Endstück aus der Wassermischarmatur vorragt.

6. Wassermischarmatur nach einem oder mehreren der vorangehenden Ansprüche, **dadurch gekennzeichnet, dass** das Endstück eine vertiefte Nut mit einem vergrößerten Abschnitt zum Aufnehmen eines Endabschnitts des Einsteckelements darin definiert und dass an dem vergrößerten Abschnitt Leitungen zum Wasserspendekanal aus der Wassermischarmatur austreten.

7. Wassermischarmatur nach einem oder mehreren der vorangehenden Ansprüche, **dadurch gekennzeichnet, dass** der Endabschnitt des Einsteckabschnitts ein Paar abgeflachter Abschnitte umfasst, um einen Eingriff mit der Nut an einer Position, die unterschiedlich zu jener des vergrößerten Abschnitts ist, zu erlauben.

8. Wassermischarmatur nach einem oder mehreren der vorangehenden Ansprüche, **dadurch gekennzeichnet, dass** die vorbestimmten oder voreingestellten Positionen zum Anordnen des Armaturenrohrs für das Nach-unten-Neigen auf der vertikalen Ebene, welche durch die Achse des Armaturenkörpers geht, definiert sind.

9. Wassermischarmatur nach einem oder mehreren der vorangehenden Ansprüche, **dadurch gekennzeichnet, dass** der Endabschnitt des Einsteckabschnitts in den Boden der Nut eingreift, um eine Wasserdurchflusseinschränkung bereitzustellen, wenn sich das Wasserspenderohr in einer nach unten geneigten oder abgesenkten Position befindet.

10. Wassermischarmatur nach einem oder mehreren der vorangehenden Ansprüche, **dadurch gekennzeichnet, dass** die Wassermischarmatur des Weiteren auf dem Boden der Muffe einen Schlitz umfasst, welcher sich über im Wesentlichen 90° hinweg erstreckt und in welchem ein Stift in Eingriff steht, der von der Mischarmatur vorragt.

11. Wassermischarmatur nach einem oder mehreren der vorangehenden Ansprüche, **dadurch gekennzeichnet, dass** auf dem Boden der Muffe eine Mehrzahl von Rasten bereitgestellt sind, welche in 90° Abständen von einander angeordnet sind, zum Eingreifen mit einem Positionierkugelelement, welche durch eine Vorspannfeder vorgespannt ist und auf dem Armaturkörper untergebracht ist.

12. Wassermischarmatur nach einem oder mehreren der vorangehenden Ansprüche, **dadurch gekennzeichnet, dass** die Wassermischarmatur des Weiteren ein Dichtungselement umfasst, welches zwischen dem Endabschnitt des Wasserspenderohreinsteckabschnitts und dem Boden der vertieften Nut angeordnet ist.

## Revendications

1. Robinet mélangeur à commande unique (1) avec un tube inclinable (9) pour un assemblage en-dessous d'une fenêtre, comprenant un corps de robinet (2) présentant un axe sensiblement horizontal muni, sur un côté de celui-ci, d'un mitigeur de contrôle (3) et, sur l'autre côté de celui-ci, d'une douille (5) de maintien de tube et d'un moyen rotatif pour entraîner de manière rotative ladite douille de maintien de tube, **caractérisé en ce que** ledit moyen rotatif est adapté pour être seulement activé lorsque le tube (9) du robinet est disposé dans des positions prédéterminées.

2. Robinet mélangeur, selon la revendication précédente, **caractérisé en ce que** sur ladite douille, est disposé un élément de support qui s'étend radialement et qui peut être fermement engagé dans la partie de connexion du tube du robinet.

3. Robinet mélangeur, selon les revendications précédentes, **caractérisé en ce que** ledit élément de support est disposé à l'intérieur d'un élément de type douille définissant, au niveau d'une partie libre de celle-ci, une rainure présentant un engagement découpé pour une entaille dépassant radialement d'une partie de base de la partie de connexion du tube.

4. Robinet mélangeur, selon l'une quelconque des revendications précédentes, **caractérisé en ce que** ladite entaille s'engage dans ladite découpe avec le tube de distribution disposé à 180° C par rapport à la position d'utilisation normale.

5. Robinet mélangeur, selon l'une quelconque des revendications précédentes, **caractérisé en ce que** ladite douille est fermement engagée de manière rotative autour d'un axe s'étendant sensiblement horizontalement avec une pièce d'extrémité dépassant dudit corps de robinet.

6. Robinet mélangeur, selon l'une quelconque des revendications précédentes, **caractérisé en ce que** ladite pièce d'extrémité définit une rainure creuse avec une partie élargie pour y loger une partie d'extrémité dudit élément de connexion et **en ce que**, au niveau de ladite partie élargie, elle conduit jusqu'au conduit de distribution d'eau venant du corps de robinet.

7. Robinet mélangeur, selon l'une quelconque des revendications précédentes, **caractérisé en ce que** la partie d'extrémité de la partie de connexion comprend une paire de portions aplaties dans le but de permettre un engagement dans ladite rainure, au niveau d'une position différente de celle de la partie élargie.

8. Robinet mélangeur, selon l'une quelconque des revendications précédentes, **caractérisé en ce que** les positions prédéterminées ou présélectionnées pour disposer le tube du robinet à incliner vers le bas sont définies sur le plan vertical passant à travers l'axe dudit corps de robinet.

9. Robinet mélangeur, selon l'une quelconque des revendications précédentes, **caractérisé en ce que** la partie d'extrémité de ladite partie de connexion s'engage au fond de ladite rainure afin de fournir une restriction de passage d'eau, avec le tube de distribution dans une position abaissée ou inclinée.

10. Robinet mélangeur, selon l'une quelconque des revendications précédentes, **caractérisé en ce que** le robinet mélangeur comprend en outre , sur le fond de ladite douille, une fente qui s'étend sensiblement à 90°, et dans laquelle est engagée une cheville dépassant dudit corps de robinet.

11. Robinet mélangeur, selon l'une quelconque des revendications précédentes, **caractérisé en ce que** sur le fond de ladite douille est prévue une pluralité d' entailles disposées à intervalles de 90 ° les unes des autres, pour s'engager dans un élément à bille de positionnement, pressé par un ressort de pression et logé dans ledit corps de robinet.

12. Robinet mélangeur, selon l'une quelconque des revendications précédentes, **caractérisé en ce que** ledit robinet mélangeur comprend un élément d'étanchéité disposé entre la partie d'extrémité de la partie du tube et le fond de la dite rainure creuse.
